(19) **Europäisches Patentamt**
**European Patent Office**
**Office européen des brevets**

(11) **EP 2 488 563 B1**

(12) # EUROPEAN PATENT SPECIFICATION

(45) Date of publication and mention
of the grant of the patent:
**27.08.2014 Bulletin 2014/35**

(51) Int Cl.:
***C08G 18/08*** *(2006.01)*    ***C08G 18/10*** *(2006.01)*
***C08G 18/12*** *(2006.01)*    ***C09D 175/04*** *(2006.01)*

(21) Application number: **10766277.7**

(22) Date of filing: **15.10.2010**

(86) International application number:
**PCT/EP2010/065540**

(87) International publication number:
**WO 2011/045420 (21.04.2011 Gazette 2011/16)**

(54) **USE OF NMP-FREE COATINGS FOR AUTOMOTIVE INTERIORS**

VERWENDUNG VON NMP-FREIEN BESCHICHTUNGEN FÜR AUTOMOBILINNENRÄUME

UTILISATION DE REVÊTEMENTS EXEMPTS DE N-MÉTHYLPYROLIDONE POUR DES INTÉRIEURS D'AUTOMOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2009 DE 102009049630**
              **15.04.2010 DE 102010015246**

(43) Date of publication of application:
**22.08.2012 Bulletin 2012/34**

(73) Proprietors:
• **Bayer Intellectual Property GmbH**
**40789 Monheim (DE)**
• **Benecke-Kaliko Aktiengesellschaft**
**D-30419 Hannover (DE)**

(72) Inventors:
• **GERTZMANN, Rolf**
**51377 Leverkusen (DE)**

• **FELLER, Thomas**
**42659 Solingen (DE)**
• **MICHAELIS, Thomas**
**51375 Leverkusen (DE)**
• **IBEN, Dirk**
**30419 Hannover (DE)**
• **KOCH, Heino**
**30419 Hannover (DE)**

(74) Representative: **BIP Patents**
**c/o Bayer Intellectual Property GmbH**
**Creative Campus Monheim**
**Alfred-Nobel-Straße 10**
**40789 Monheim (DE)**

(56) References cited:
**EP-A1- 0 669 352**      **EP-A1- 1 582 542**
**WO-A1-03/035710**      **WO-A1-2008/107395**
**US-A1- 2006 293 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the use of polymer mixtures in the coating of decorative films and decorative surfaces.

Polymer mixtures containing polymer resins, mattifying agents and crosslinker components are used in the automotive industry in the coating of decorative surfaces in automotive interiors.

Polymer resins based on polyurethane are frequently used. Many polyurethanes contain N-methylpyrrolidone (NMP) as solvent because it is unreactive towards isocyanate groups and is accordingly suitable for reducing the viscosity during synthesis of the prepolymer. Moreover, NMP is capable of dissolving high melting dimethylolpropionic acid, which is often used in polyurethane dispersion chemistry. The use of NMP ensures that a sufficient number of hydrophilic centres in the form of carboxylate groups are incorporated into the polyurethane skeleton in an economically acceptable reaction time.

NMP is to be classified as a teratogenic substance, however. Moreover, it has been shown that NMP and other cosolvents evaporate out of coatings on decorative surfaces in automotive interiors over time. Such emissions lead to an increased concentration of NMP and other harmful cosolvents in the automotive interior, and accordingly to a health risk for the occupants.

Document WO 03/035710 A1 is directed to the problem of emission reduction of coatings (p.1, 1.30 to p.2, 1.6 and p.6, 1.1-7). The examples 1 and 3 of WO 03/035710 A1 disclose hydroxy-functional polyurethane dispersions prepared from Desmophen C200, IPDI, DMPA, butanediol, TMP, DEA (a monoamine) and TEA. Then, an isocyanate is used to crosslink the dispersion. Additionally a mattifying agent may be used.

It was, therefore, an object of the present invention to provide polymer mixtures whose use in the coating of decorative surfaces in automotive interiors leads to low or zero emissions of NMP, so that decorative surfaces that have been coated with such polymer mixtures satisfy the OEM-specific standards.

It was a further object of the present invention to provide polymer mixtures whose use in the coating of decorative surfaces in automotive interiors leads to low or zero emissions of NMP and at the same time allows the good properties of decorative surfaces based on conventional polymer mixtures to be retained, for example a high degree of dullness with consistently high transparency.

The above-mentioned objects are achieved by the subject-matters of the present invention.

The present invention is directed to the use of low-NMP, aqueous polymer mixtures which are characterised in that they contain at least one aqueous polyurethane dispersion based on polyurethane having a content of Zerewitinoff-active hydrogen atoms from OH groups and NH groups in the range from 0.01 to 0.25 wt.%, based on the total amount of polyurethane, and at least one mattifying agent and at least one crosslinker and/or crosslinker system and wherein the content of NMP is from 0.0 to 0.5 wt.%, based on the polymer mixture in the coating of decorative films and decorative surfaces.

The polyurethane dispersion preferably has a content of Zerewitinoff-active hydrogen atoms from OH groups and NH groups in the range from 0.01 to 0.22 wt.%, particularly preferably in the range from 0.05 to 0.20 wt.%, based on the total amount of polyurethane.

Hydrogen bonded to N or O is referred to as Zerewitinoff-active hydrogen (sometimes also only as "active hydrogen") when it yields methane by reaction with methylmagnesium iodide according to a process discovered by Zerewitinoff.

The polyurethane dispersion contains as structural components at least one monoalcohol (f) having a mean molecular weight $M_n$ of from 32 to 145 g/mol and/or at least one monoamine (g) having a mean molecular weight $M_n$ of from 17 to 147 g/mol.

The content of monoalcohols (f) and monoamines (g) is preferably from 0.1 wt.% to 1.5 wt.%, particularly preferably from 0.1 wt.% to 1.3 wt.%, based on all the structural components of the polyurethane dispersion.

The content of NMP is preferably from 0.0 to 0.3 wt.%, particularly preferably from 0.0 to 0.1 wt.%, based on the total amount of the polymer mixture. Yet more preferably, the polymer mixture according to the invention is free of NMP.

Within the scope of the present invention, free of NMP means that the content of NMP in the polymer mixture is less than or equal to the detection limit (i.e. ≤ .1 ppm) when measured by gas chromatography.

The use of the polymer mixtures according to the invention for coating decorative surfaces or decorative films in automotive interiors leads to low or zero emissions of NMP and likewise to low or zero emissions of other cosolvents.

The polyurethane dispersions used according to the invention have a low cosolvent content. The polyurethane dispersions used according to the invention contain preferably from 0.0 to 0.9 wt.%, particularly preferably from 0.0 to 0.5 wt.%, most particularly preferably from 0.0 to 0.4 wt.%, cosolvents, based on the total amount of the polyurethane dispersion.

The polymer mixtures according to the invention have a low cosolvent content. The polyurethane dispersions used according to the invention contain preferably from 0.0 to 0.9 wt.%, particularly preferably from 0.0 to 0.5 wt.%, most particularly preferably from 0.0 to 0.4 wt.%, cosolvents, based on the total amount of the polyurethane dispersion.

Cosolvents within the scope of the present invention are polar organic solvents. Cosolvents are preferably organic solvents having a Hansen parameter in the range from 7.2 to 16.0 $(cal/cm^3)^{0.5}$ and a $pK_B$ value > 7. Cosolvents are particularly preferably organic solvents having a Hansen parameter in the range from 7.2 to 16.0 $(cal/cm^3)^{0.5}$ and a $pK_B$ value > 8. Cosolvents are most particularly preferably organic solvents having a Hansen parameter in the range from 7.2 to 16.0 $(cal/cm^3)^{0.5}$ and a $pK_B$ value > 9. The Hansen parameters are disclosed *inter alia* in "Polymer Handbooks", Eds. Brandrup, J; Immergut, E.H.; Grulke, E.A., 4th Edition, John Wiley, New York, 1999, VII/pages 675-711.

Preferred cosolvents within the scope of the present invention are polar organic solvents selected from the group consisting of acetone, methyl ethyl ketone, butyl diglycol, dimethyl sulfoxide, N-ethylpyrrolidone, dimethylformamide, dimethylacetamide and dipropylene glycol dimethyl ether.

The cosolvents are on the one hand solvents which have already been used in the synthesis of the polyurethane polymer and on the other hand solvents which have been added to the polyurethane dispersion subsequently in order to establish the desired properties.

The inventively used aqueous polyurethanc dispersion contains as further structural components

a) at least one polyisocyanate,

b) at least one polyol having a mean molar weight $M_n$ of from 500 to 6000 g/mol,

c) at least one polyol having a mean molar weight $M_n$ of from 62 to 500 g/mol,

d) at least one compound which contains an ionic group or a group capable of forming an ionic group, and

e) at least one polyamine having a mean molecular weight $M_n$ of from 32 to 500 g/mol.

The resin of the polyurethane dispersion used according to the invention preferably has a content of component c) of from 1.5 to 23 wt.%, particularly preferably from 3.0 to 17 wt.%, and a hard segment content (HS) of from 28 to 85 wt.%, preferably from 30 to 80 wt.% and particularly preferably from 32 to 75 wt.%, the amount of isocyanate, based on the amount of solids, being from 22 to 55 wt.%, preferably from 22 to 50 wt.%, particularly preferably from 22 to 48 wt.%. The acid number of the solid resin is from 11 to 30 mg KOH/g solid resin, preferably from 13 to 28 mg KOH/g solid resin and particularly preferably from 13 to 27 mg KOH/g solid resin.

The hard segment content is calculated as follows:

$$HS = \frac{100 * [\sum mass\ (a, c, d, e, f, g)]}{\sum mass\ (a, b, c, d, e, f, g)}$$

Suitable as component a) are the polyisocyanates conventionally used in polyurethane chemistry, for example diisocyanates of the formula $R^1(NCO)_2$, wherein $R^1$ represents an aliphatic hydrocarbon radical having from 4 to 12 carbon atoms, a cycloaliphatic hydrocarbon radical having from 6 to 15 carbon atoms, an aromatic hydrocarbon radical having from 6 to 15 carbon atoms or an araliphatic hydrocarbon radical having from 7 to 15 carbon atoms. Examples of preferred diisocyanates are tetramethylene diisocyanate, hexamethylene diisocyanate, 4,4'-diisocyanatodiphenylmethane, 2,4'-diisocyanatodiphenylmethane, 2,4-diisocyanatotoluene, 2,6-diisocyanatotoluene or $\alpha,\alpha,\alpha',\alpha'$-tetra-methyl-m- or -p-xylylene diisocyanate, as well as mixtures of the mentioned diisocyanates. Particularly preferred diisocyanates are 1-isocyanato-3,3,5-trimethyl-5-isocyanatomethylcyclohexane (isophorone diisocyanate) and 4,4'-diisocyanatodicyclohexylmethane.

Small amounts of, for example, tri- and/or higher-valent isocyanates can optionally be used in order thus to ensure a specific degree of branching or crosslinking of the polyurethane. The amount of polyisocyanate to be used is governed by its functionality and is to be such that the NCO prepolymer remains stirrable and dispersible. Such isocyanates are obtained, for example, by reacting divalent isocyanates with one another in such a manner that some of their isocyanate groups are derivatised to isocyanurate, biuret, allophanate or uretdione groups. Such polyisocyanates hydrophilised via ionic groups, as are conventionally used as crosslinkers in aqueous two-component (2K) PUR lacquers, are also suitable. Examples of such isocyanates are described in EP-A 510 438, in which polyisocyanates are reacted with OH-functional carboxyl compounds. Hydrophilised polyisocyanates are further obtained by reaction of polyisocyanates with compounds that are reactive towards isocyanates and carry sulfuric acid groups. Such polyisocyanates have functionalities of, for example, more than 2.2.

Suitable polymeric polyols b) have a molecular weight range ($M_n$) from 500 to 6000 g/mol, preferably from 500 to 3000 g/mol and particularly preferably from 650 to 2500 g/mol. The OH functionality is from at least 1.8 to 3, preferably from 1.9 to 2.2 and particularly preferably from 1.92 to 2.0. The polyols are, for example, polyesters, polyethers based on propylene oxide and/or tetrahydrofuran, polycarbonates, polyester carbonates, polyacetals, polyolefins, polyacrylates and polysiloxancs. Preference is given to the use of polyesters, polyethers, polyester carbonates and polycarbonates. Polyesters, polyethers, polyester carbonates and polycarbonates having OH functionalities of from 1.92 to 2.0 are particularly preferred. Mixtures of the described polymeric polyols b) are likewise suitable.

In admixture with the mentioned polyols b) it is possible to use in addition also fatty-acid-containing polyesters b1), which are obtained by esterification or transesterification product(s) of drying and/or non-drying fatty acids or oils with at least bifunctional polyol compounds, as are described, for example, in EP-A 0 017 199 (p. 10, 1. 27 to p. 11, 1. 31). Tetrafunctional hydroxyl components, for example pentaerythritol, are preferably used as the polyol compounds.

Likewise suitable as the polyol b1) is partially dehydrated castor oil, which is obtained by subjecting castor oil to heat with acid catalysis and is described in EP-A 0 709 414 (p. 2, 1. 37-40).

Likewise suitable as polyols b1) are those which are disclosed in DE-A 199 30 961 (p. 2, 1. 46-54; p. 2, 1. 67 to p. 3, 1. 3). In that specification, aliphatic and cycloaliphatic monocarboxylic acids having from 8 to 30 carbon atoms, for example oleic acid, lauric acid, linoleic acid or linolenic acid, are reacted with castor oil fatty acid in the presence of glycerol.

Also suitable as polyols b1) are transesterification products of castor oil with one other or a plurality of other triglycerides. The molar composition of the mixture is thereby so calculated that the mean OH functionality of the end product is in the range from 1.8 to 2.2.

Particularly preferred as component b1) are fatty-acid-containing components which are bifunctional in the statistical mean in respect of the OH groups and which contain glycerol or trimethylolpropane units. Most particular preference is given to transesterification products having mean OH functionalities of 2 of castor oil with a further oil other than castor oil. The fatty-acid-containing polyesters b1) are preferably used with polyols b) which have an $M_n$ of from 650 to 2500 g/mol and OH functionalities of from 1.9 to 2. The fatty-acid-containing polyesters b1) arc particularly preferably used with polyols b) which have an $M_n$ of from 650 to 2500 g/mol, OH functionalities of from 1.92 to 2 and are selected from the group of the esters, ethers, carbonates and carbonate esters.

Preferably, the polyurethane dispersion used according to the invention contains as the polyol only component b) in amounts of from 15 to 72 wt.%, preferably from 20 to 70 wt.% and particularly preferably from 25 to 68 wt.%, based on the total amount of resin.

In a further embodiment of the present invention, the polyurethane dispersion used according to the invention contains components b) and b1), the total amount thereof being not more than 65 wt.%, measured on the total amount of resin of components a) to g), and the amount of component b1), based on the total amount of resin of the polyurethane dispersion, being from 0 to 30 wt.%, preferably from 0 to 25 wt.%.

Low molecular weight polyols c) having a molecular weight range ($M_n$) from 62 to 500 g/mol, preferably from 62 to 400 g/mol and particularly preferably from 90 to 300 g/mol, are the bifunctional alcohols conventionally used in polyurethane chemistry, for example ethanediol, 1,2- and 1,3-propanediol, 1,2-, 1,3- and 1,4-butanediol, 1,5-pentanediol, 3-methyl-1,5-pentanediol, 1,6-hexanediol, neopentyl glycol, cyclohexane-1,4-dimethanol, 1,2- and 1,4-cyclohexanediol , 2-ethyl-3-propyl-pentanediol, 2,4-dimethylpentanediol, 2-ethyl-2-butylpropanediol, diols containing ether oxygen, for example diethylene glycol, triethylene glycol, tetraethylene glycol, dipropylene glycol, tripropylene glycol, polyethylene, polypropylene or polybutylene glycols, N-substituted ethanolamines, as well as mixtures of these products. Preferred polyols c) are 1,4-butanediol, 1,5-pentanediol, 3-methyl-1,5-pentanediol, 1,6-hexanediol, neopentyl glycol, cyclohexane-1,4-dimethanol, 1,2- and 1,4-cyclohexanediol. Most particularly preferred polyols c) are 1,4-butanediol, 1,6-hexanediol and neopentyl glycol.

Tri- and higher-functional alcohols of the indicated molecular weight range can be used concomitantly, proportionately, in an amount such that the polymer solution remains stirrable. Such components include trimethylolpropane, trimethylolethane, glycerol and pentaerythritol. In admixture with the mentioned polyols c), it is possible to use in addition also fatty-acid-containing polyesters c1) having molar weights < 500 g/mol, which are obtained by esterification or transesterification product(s) of drying and/or non-drying fatty acids or oils having at least bifunctional polyol compounds, as are described, for example, in EP-A 0 017 199 (p. 10, 1. 27 to p. 11, 1. 31). There are preferably used as polyols compounds tri- and tetra-functional hydroxyl components, for example trimethylolethane, trimethylolpropane, glycerol or pentaerythritol. Likewise suitable are fatty acid amides of fatty acids/fatty acid chlorides and dialkanolamines, preferably diethanolamine.

The amounts of components c) and c1) are such that the sum thereof, measured on the resin of the polyurethane dispersion, is from 1.5 to 23 wt.%, preferably from 1.5 to 10 wt.% and particularly preferably from 1.0 to 8 wt.%. The weight ratio of c) to c1) ranges from 100 : 0 to 20 : 80, preferably from 100 : 0 to 30 : 70 and particularly preferably from 100 : 0 to 40 : 60.

In a preferred embodiment, only component c) is used in amounts of from 1.5 to 23 wt.%, preferably from 1.5 to 10 wt.% and particularly preferably from 1.0 to 8 wt.%, measured on the resin of the polyurethane dispersion.

Suitable as component d) are low molecular weight OH-group- and/or NH-group-containing compounds which contain ionic groups or are capable of forming an ionic group, for example 2-(2-amino-ethylamino)-ethanesulfonic acid, ethylenediamine-propyl- or ethylenediamine-butyl-sulfonic acid, 1,2- or 1,3-propylenediamine-β-ethylsulfonic acid, dimethylolpropionic acid, dimethylolbutyric acid, hydroxypivalic acid, reaction products of (meth)acrylic acid and polyamines (e.g. DE-A 19 750 186, p. 2, 1. 52-57) or sulfonate-group-containing polyol components, for example the propoxylated adduct of sodium hydrogen sulfite on 2-butenediol or the polyesters described in EP-A 0 364 331 (p. 6, 1. 1-6) composed of salts of sulfoisophthalic acid. Components containing carboxylic acid groups are preferred. Dimethylolpropionic acid is particularly preferred.

Suitable neutralising components for the anionic dispersions are the tertiary amines known to the person skilled in the art, ammonia, as well as alkali hydroxides. Preferably, the neutralising component has a $pK_B$ value < 7, particularly preferably < 6.5 and most particularly preferably < 6.4.

The NCO preopolymer preferably contains no non-ionic hydrophilising agents.

There are suitable as chain extenders c) polyamines having a molar weight $M_n$ of from 32 to 500 g/mol, for example ethylenediamine, 1,2-diaminopropane, 1,4-diaminobutane, 1,6-hexamethylenediamine, 2-methyl-1,5-pentanediamine, isophoroncdiamine, 4,4'-diamino-dicyclohexylmethane, piperazine, $N^2$-methyl-diethylenetriamine or diethylenetriamine. Likewise suitable is hydrazine. The diamines ethylenediamine, 2-methyl-1,5-pentanediamine or isophoronediamine are preferred.

There come into consideration as component f) monofunctional alcohols having from 1 to 18, preferably from 1 to 12, particularly preferably from 1 to 8, carbon atoms. These include, for example, methanol, ethanol, 1-propanol, 2-propanol, primary butanol, secondary butanol, n-hexanol and its isomers, 2-ethylhexyl alcohol, ethylene glycol monomethyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, propylene glycol monobutyl ether, dipropylene glycol monobutyl ether, tripropylene glycol monobutyl ether, 1-octanol, 1-dodecanol, 1-hexadecanol, lauryl alcohol, as well as stearyl alcohol. Preferred components f) are ethanol, 1-propanol, 2-propanol, primary butanol, secondary butanol, n-hexanol and its isomers, 2-ethylhexyl alcohol, ethylene glycol monomethyl ether, diethylene glycol monomethyl ether, ethylene glycol monobutyl ether and diethylene glycol monobutyl ether. Particularly preferred components f) are n-butanol, n-hexanol, 2-ethylhexyl alcohol, ethylene glycol monobutyl ether or ethylene glycol monomethyl ether.

Suitable monoamines g) are those which have a molar weight of from 17 to 147 g/mol, for example ammonia, methylamine, ethylamine, diethylamine, propylamine, n-butylamine, dibutylamine, 2-aminobutane, 1-aminopentane, 2-aminopentane, ethanolamine, diethanolamine, 1-amino-2-propanol, 3-amino-1-propanol, 2-amino-1-butanol, 5-amino-1-pentanol. The preferred monoamines g) include n-butylamine, 2-aminobutane, 1-aminopentane, 2-aminopentane, ethanolamine and diethanolamine. Most particularly preferred components g) are n-butylamine and diethanolamine.

Suitable solvents for preparing the inventively used polyurethane dispersion are those which boil below 100°C at normal pressure, do not contain groups reactive towards isocyanates and, in addition, are water-soluble. In addition, it must be possible to remove the solvent from the prepared dispersion by distillation. Examples of such solvents are acetone, methyl ethyl ketone, tert-butyl methyl ether and tetrahydrofuran. Methyl ethyl ketone or acetone is preferably used as solvent; acetone is particularly preferred.

The inventively used polymer mixture further contains at least one mattifying agent. The person skilled in the art makes a distinction between inorganic and organic mattifying agents. Inorganic mattifying agents are, for example, Acematt® from Evonik Degussa / Frankfurt am Main or Syloid® from Grace / Worms. Organic mattifying agents are, for example, stearates or polymer-organic mattifying agents (for example Polymatte® from Stahl Europe / Waalwijk or Astacin® Novomatt ® from BASF / Ludwigshafen). Further mattifying agents are mentioned, for example, in Karsten: Lackrohstoff-Tabellen, 10th Edition, Vincents Verlag, Hanover 2000. The polymer mixture according to the invention can also contain combinations of inorganic and organic mattifying agents. Inorganic mattifying agents are used preferably in amounts of from 0.1 to 6 wt.%, particularly preferably from 0.5 to 5 wt.%, most particularly preferably from 1 to 4 wt.%, based on the polymer mixture. Polymer-organic mattifying agents, based on an aqueous polyurethane dispersion and/or based on polymer-organic compounds, are used preferably in amounts of from 0.1 to 75 wt.%, particularly preferably from 0.5 to 60 wt.%, most particularly preferably from 10 to 55 wt.%, based on the polymer mixture.

For crosslinking, all types of crosslinking known to the person skilled in the art are suitable. Examples which may be mentioned here are chemical and/or physical types of crosslinking, such as amine crosslinking, aziridine crosslinking, carbodiimide crosslinking, enamine crosslinking, epoxide crosslinking, epoxysilane crosslinking, urea crosslinking, hydrazide crosslinking, melamine crosslinking or oxidative drying. Self-crosslinking systems, such as azomethine crosslinking, a carbonyl-amine reaction which takes place by evaporation of the neutralising agent and of the water, autooxidation or UV-aqueous are also conceivable. Further possible types of crosslinking are silane crosslinking and/or radiation crosslinking, for example by means of UV radiation. Dual-cure crosslinking, that is to say a combination of polyurethane and UV crosslinking chemistry, is likewise possible. The mentioned types of crosslinking can be carried out on their own or in any desired combination.

As polycarbodiimides there can also be used those modified according to patent EP0507407.

The inventively used polymer mixture contains preferably from 0.1 to 50 wt.% of at least one crosslinker or crosslinker system, particularly preferably from 0.1 to 25 wt.%, most particularly preferably from 0.2 to 15 wt.%, based on the polymer mixture.

The crosslinker or crosslinker system of the inventively used polymer mixture is preferably based on a compound selected from the group consisting of polyisocyanate, polyepoxide, epoxysilane, alkoxymethylmelamine, urea resin, polycarbodiimide and polyaziridine. A crosslinker system based on at least one polyisocyanate and/or at least one polycarbodiimide is particularly preferably used.

If the polyisocyanate forms the basis of the crosslinker or crosslinker system, the polyisocyanate preferably has an NCO content of from 5 to 30 wt.%, particularly preferably from 7 to 25 wt.%.

The polyisocyanate can be a polyisocyanate selected from the group consisting of hexamethylene diisocyanate (HDI), isophorone diisocyanate (IPDI), 4,4'-dicyclohexylmethane diisocyanate ($H_{12}$MDI) and hexahydrotoluene diisocyanate ($H_6$TDI), it being possible for each of these polyisocyanates to be present in the form of the biuret or uretdione or allophanate or isocyanurate or iminooxadiazinedione.

The NCO content, prior to crosslinking, of the inventively used polymer mixture crosslinked by the crosslinker or crosslinker system is preferably from 0.1 to 9.0 wt.%, particularly preferably from 0.1 to 8.0 wt.%, most particularly preferably from 0.1 to 5.0 wt.%.

The inventively used polymer mixture contains preferably from 0 to 75 wt.%, particularly preferably from 1 to 70 wt.%, most particularly preferably from 5 wt.% to 65 wt.%, diluent. The diluent is water and/or low molecular weight alcohols or a mixture thereof in variable proportions by weight. Preferred low molecular weight alcohols are selected from the group consisting of ethanol, propanol, isopropanol, n-butanol and isobutanol. A mixture of water and isopropanol is particularly preferably used as diluent.

The polymer mixture further contains preferably from 0 to 40 wt.%, particularly preferably from 0 to 30 wt.%, most particularly preferably from 0 to 20 wt.%, of at least one lubricant.

The lubricant is one and/or more compounds selected from the group consisting of polydialkylsiloxane, polydimethylsiloxane (PDMS), modified polysiloxanes, branched polyorganosiloxanes, polyolefinic waxes, polyamide waxes, polytetrafluoroethylene (PTFE), alternating ethylene-chlorotrifluoroethylene copolymers (ECTFE), perfluorinated alkoxy resins (PFA) and natural waxes, for example carnauba waxes. It is particularly preferred, however, for the non-functionalised lubricant to be a polydimethylsiloxane and to have from 10 to 14,000 D-silicone structural units.

Lubricants are described in detail, for example, in W. Büchner et al. "Industrielle Anorganische Chemie", Verlag Chemie, Weinheim, 1986. Chap. 4ff.;

Textbook "Lackharze", published by Dieter Stoye and Werner Freitag, Carl Hanser Verlag, Munich, Vienna 1996. Chap. 9ff.;

tego journal, published by Tego Chemie Service GmbH / Essen, 3rd Edition 2007; Oberflächenadditive (technical information L-SI1), published by Byk-Chemie / Wesel, Edition 09/2005; Wachsadditive (technical information L-CI1), published by Byk-Chemie / Wesel, Edition 09/2005;

Karsten Lackrohstoff-Tabellen, prepared by Olaf Lückert, 10th Edition. Vincentz Verlag, Hanover 2000;

Anthony Bogacki: Sind Antifriction-Lacke ein Bluff - schön verkauft? - In: Symposium "Hochwertige Werkstoffe für den Fahrzeuginnenraum", SKZ Würzburg 29./30.06.2005.

Functionalised lubricants can also be used alternatively or in combination, at least one functionalised and modified polysiloxane lubricant being preferred. The functionalised lubricant is modified with primary and/or secondary and/or tertiary amino groups and/or OH groups.

The functionalised lubricant preferably has an amine number from 0.1 to 3.0 mg KOH/g and/or an OH content from 0.3 to 5.0 wt.%.

Further added ingredients are present in the inventively used polymer mixture in amounts of preferably from 0 to 50 wt.%, particularly preferably in amounts from 0.1 to 45 wt.%, most particularly preferably in amounts of from 0.1 to 35 wt.%. The added ingredients are selected from the group consisting of light stabilisers, such as UV absorbers and reversible radical acceptors, antioxidants, wetting agents, substrate wetting agents, emulsifiers, flow agents, film-forming auxiliary substances, rheology aids, flameproofing agents, biocides, neutralising agents, antifoams, thickeners, inorganic fillers, organic fillers and pigments.

It is preferred for from 0 to 25 wt.% organic fillers and/or inorganic fillers and/or pigments to be present.

In addition, further added ingredients known to the person skilled in the art can be used. Such added ingredients are described *inter alia* in:

- textbook "Lackadditive" by Johann Bielemann, Wiley-VCH, Weinheim, New York 1998
- Lehrbuch der Lacke und Beschichtungen, Volume 4 (Lösemittel, Weichmacher, Additive), published by Martina Oertelt, 2nd Edition, S. Hirzel Verlag, Stuttgart 2007
- Additive für wässrige Lacksysteme, by Wemfried Heilen, Vincentz Netzwork, Hanover 2009

- Kunststoffbeschichtung. Aktuell, kompakt, praxisnah, by Guido Wilke and Jürgen Ortmeier, Vincentz Netzwork, Hanover 2009.

Decorative surfaces for mouldings made of a plastics material provided with a film are widely known. There is preferably used as the base material a plastics material consisting of a polymer mixture based on polyvinyl chloride (PVC), in particular plasticised PVC, polyurethane (PUR), polyolefin, polyester (PES), acrylonitrile-butadiene-styrene copolymer (ABS), polymethyl methacrylate, polycarbonate, polyacrylate or mixed polymers. For further literature, reference is made, for example, to "Jahnke, Manfred; Mielke, Dirk; Van Well, Michael: Dekorative Oberflächen aus Pasten PVC für den Automobilinnenraum. - In: SKZ Symposium "PVC-Pasten" on 19./20.09.2007. Süddeutsches Kunststoff-Zentrum, Würzburg, 2007".

The polymer mixture is used on the decorative surface preferably as a top and/or lacquer layer for the decorative surface, it also being possible for the lacquer layer to consist of one or more identical or different polymer mixtures. In order to adjust the technical properties, for example the friction behaviour, the surface feel, in particular the surface feel to the touch, the rheology, the dulling behaviour, and the light and heat resistance, various crosslinker components, mattifying agents and additives, also referred to as further added ingredients, are added to the polymer mixture. The addition of the added ingredients takes place, according to the OEM specification, in different parts by weight relative to one another. This procedure is known to the person skilled in the art.

The polymer mixture according to the invention is used as a coating on decorative films for mouldings or on mouldings. Preferred applications of such decorative films are dashboards or door linings or interior lining parts or seat covering material in a vehicle.

The resulting overall dry layer thickness over all the layers is from 0.5 to 50 $g/m^2$, preferably from 1 to 35 $g/m^2$.

The inventively used polymer mixture can be applied in the known manner, for example by spread coating, pouring, knife application, spraying, spin coating, roller coating or dipping.

## Examples

Method for determining the molar weights the following GPC equipment (calibrated to polystyrene standard) was used.

| | |
|---|---|
| Pump: | Hewlett Packard 1100 |
| Injector: | Hewlett Packard 1100 |
| Detector 1: | Hewlett Packard Kontron 240 nm |
| Detector 2: | Hewlett Packard RI G 1362A |

| | |
|---|---|
| Columns: | 1. HEMA 3000 - 10 $\mu$m; MZ Analysentechnik |
| | 2. HEMA 300 - 10 $\mu$m; MZ Analysentechnik |
| | 3. HEMA 40 - 10 $\mu$m; MZ Analysentechnik |
| | 4. HEMA 40 - 10 $\mu$m; MZ Analysentechnik |
| Eluant: | Dimethylacetamide |
| Flow rate: | 0.6 ml/min |
| Pressure: | about 70 bar |

**Method for determining NMP and other cosolvents in a polymer mixture**

100 mg or 10 $\mu$l of the sample to be tested are weighed into a 20 ml headspace bottle, which is sealed with PTFE-lined butyl septums. There are further prepared 5 calibrations of the cosolvents used in various compositions, which are, however, to lie within the range of the desired concentration of the substances to be tested.

The samples are processed in a gas chromatograph (e.g. GC Clarus 500 with headspace device HS 40 from PerkinElmer / Jüggesheim).

GC conditions:

Column: 60 m capillary column HP-5, ID = 0.25 mm, film thickness = 1 mm

Detector: FID (flame ionisation detector)
Detector range: low
Detector temperature: 250°C
Injector temperature: 210°C
Carrier gas: helium
Carrier gas stream: 1 ml/min
Split: splitless

| GC temperature programme: | 1 | 2 |
|---|---|---|
| Oven temperature [°C] | 55 | 200 |
| Residence time [min] | 0 | 15 |
| Heating rate [K/min] | 15 | |

HS 40 conditions:

Mode: constant
Sample temperature: 210°C
Tempering time: 30 min
Pressure build-up time: 1.0 min
Injector time: 0.08 min
Deaeration time: 0.2 min
Cycle time: 30 min
Injections: 1

Evaluation: For each cosolvent, the gradient is calculated from the calibrations. Using the corresponding gradient, the amount is calculated for each solvent and then converted to the percentage composition.

**Method for determining NMP and other cosolvents in a film**

1 cm$^2$ of the film to be tested is weighed into a 22 ml headspace bottle, which is sealed with PTFE-lined butyl septums. 4 injections are carried out per headspace bottle. The samples are processed in a gas chromatograph (e.g. GC Clarus 500 with headspace device HS 40 from PerkinElmer / Jüggesheim):

GC conditions:
Column: 30 m capillary column HP-5, ID = 0.25 mm, film thickness = 1 mm
Detector: FID (flame ionisation detector) + MSD (mass selective detector)

Detector range: low
Detector temperature: 250°C
Injector temperature: 210°C
Carrier gas: helium
Carrier gas stream: 1 ml/min
Split: 1 : 20

| GC temperature programme: | 1 | 2 |
|---|---|---|
| Oven temperature [°C] | 50 | 180 |
| Residence time [min] | 3 | 9 |
| Heating rate [K/min] | 12 | |

HS 40 conditions:

| | |
|---|---|
| Mode: | MHE (Multiple Headspace Extraction) |
| Sample temperature: | 180°C |
| Tempering time: | 40 min |
| Pressure build-up time: | 1 min |
| Injector time: | 0.04 min |
| Deaeration time: | 0.2 min |
| Cycle time: | 40 min |
| Injections: | 4 |

Evaluation: From the peak areas of the 4 injections, the total peak area for each component to be determined is calculated so that, after calibration with the component to be determined, a quantitative result is obtained.

**Method for determining the degree of gloss of a polymer mixture**

The finish test film is placed smoothly on the vacuum plate of the Coatmaster and the vacuum is switched on. The polymer mixture is applied as a wet film of defined thickness to the finish test film by means of a film applicator and the Coatmaster. The film is then dried for 3 minutes at 130°C in a circulating air oven. After drying and cooling to room temperature, the degree of gloss of the film is measured by means of a reflectometer.

Devices:

1. Erichsen Coatmaster 509 MC with vacuum suction plate (Erichsen / Hemer),
2. Rotary vane vacuum pump,
3. Erichsen film applicator (Erichsen / Hemer), WASAG system, model 288, gap height 40 $\mu$m and 100$\mu$m,
4. Finish test film Benecke-Kaliko article number VV050472A0265A (Benecke-Kaliko / Hanover),
5. Circulating air oven (Binder / Tuttlingen),
6. Dr. Lange Refo 3D reflectometer (Dr. Bruno Lange / Düsseldorf), 60° measuring geometry, 300 scale divisions (s.d.), according to DIN EN ISO 2813.

The polymer mixture is to be described in greater detail by means of an Implementation Example A, consisting of a base lacquer and a finishing lacquer, and corresponding test results.

**Preparation of polyurethane dispersion type 1**

Preparation of the fatty-acid-containing polyester: 3200 g of castor oil and 1600 g of soybean oil as well as 2.0 g of dibutyltin oxide were weighed into a 5-litre reactor having a fractionating column. A stream of nitrogen (5 l/h) was passed through the reactants. The mixture was heated to 240°C in the course of 140 minutes and, after 6 hours at 240°C, was cooled. The OH number was 108 mg KOH/g, the acid number was 2.5 mg KOH/g.

119.4 g of the fatty-acid-containing polyester, 40.7 g of polyether (polypropylene oxide, OH number 112), 29.9 g of dimethylolpropionic acid, 11.9 g of coconut oil fatty acid diethanolamide and 12.8 g of 1,6-hexanediol were mixed and heated to 55°C. 150. g of acetone and 231.7 g of Desmodur® W were added in succession to the mixture, and boiling was carried out under reflux until an NCO content of 5.1 wt.% was reached. The mixture was again adjusted to 55°C, and 16.9 g of triethylamine, which had been stirred thoroughly, were added to the clear solution. The whole of the neutralised prepolymer solution (55°C) was dispersed, with vigorous stirring, in 776.6 g of water, which was at a temperature of 30°C. After the dispersion, stirring was carried out for a further 5 minutes before a solution of 11.8 g of ethylenediamine, 0.5 g of diethylenetriamine and 7.8 g of diethanolamine, dissolved in 73 g of water, was added in the course of 5 minutes. Thereafter, the acetone was removed by distillation *in vacuo* (120 mbar) at 40°C. In order to react the reamining isocyanate groups, the mixture was stirred at 40°C until no further NCO was detectable by IR spectroscopy. After cooling to 30°C, filtration through a 240 $\mu$m rapid filter was carried out.

9

**Characteristic data of the polyurethane dispersion:**

| Solids content: | 35 % |
|---|---|
| Hard segment content: | 64 % |

Acid number (based on solid resin): 28.0 mg KOH/g
Mn (GPC) = 20.124 g/mol
NH content = 0.15 %

**Preparation of polyurethane dispersion type 2**

152.1 g of Desmodur® W and 348.7 g of Desmodur® I were heated to 55°C and stirred. 62.2 g of dimethylolpropionic acid were then added. After 5 minutes, a solution of 470.4 g of Desmophen® C 1200, 96.3 g of neopentyl glycol, 2.8 g of butyl glycol and 377.5 g of acetone was added in the course of 20 minutes, and the mixture was heated to 68°C. Stirring was carried out at that temperature until an NCO content of 2.8 % was reached. Thereafter, the mixture was cooled to 60°C, and 46.9 g of triethylamine were added. 450 g of this solution were dispersed, with vigorous stirring, in 545.9 g of water, which was at a temperature of 35°C. After the dispersion, stirring was carried out for a further 5 minutes. A solution of 2.0 g of diethylenetriamine, 1.1 g of n-butylamine and 3.5 g of ethylenediamine in 60.7 g of water was then added in the course of 10 minutes. When the addition was complete, stirring was carried out for 20 minutes at 40°C before the acetone was removed by distillation *in vacuo* at that temperature. In order to react the isocyanate groups completely, stirring was carried out at 40°C until no further NCO was detectable by IR spectroscopy. After cooling to < 30°C, filtration was carried out over a 240 μm rapid filter from Erich Drehkopf.

**Characteristic data of the polyurethane dispersion:**

| Mean particle size (LCS): | 25 nm |
|---|---|
| pH (solids diluted to 10 wt.%): | 7.9 |
| Solids content: | 35.9 % |
| Acid number (based on solid resin): | 22.5 mg KOH/g |
| Hard segment content: | 59.3 % |
| Mn (GPC) = 12.048 g/mol | |

NH content = 0.25 %

**Preparation of polyurethane dispersion type 3**

62.0 g of Desmodur® W and 142.0 g of Desmodur® I were heated to 55°C and stirred. 37.7 g of dimethylolpropionic acid were then added. After 5 minutes, a solution of 470.5 g of Desmophen® C 1200, 15.6 g of neopentyl glycol, 1.1 g of butyl glycol and 243 g of acetone was added in the course of 20 minutes, and the mixture was heated to 68°C. Stirring was carried out at that temperature until an NCO content of 1.8 % was reached. Thereafter, the mixture was cooled to 60°C, and 27.2 g of ethyldiisopropylamine were added. The solution was dispersed, with vigorous stirring, in 807 g of water, which was at a temperature of 35°C. After the dispersion, stirring was carried out for a further 5 minutes. A solution of 1.8 g of diethylenetriamine, 1.0 g of n-butylamine and 3.3 g of ethylenediamine in 72 g of water was then added in the course of 10 minutes. When the addition was complete, stirring was carried out for 20 minutes at 40°C before the acetone was removed by distillation *in vacuo* at that temperature. In order to react the isocyanate groups completely, stirring was carried out at 40°C until no further NCO was detectable by IR spectroscopy. After cooling to < 30°C, filtration was carried out over a 240 μm rapid filter from Erich Drehkopf.

**Characteristic data of the polyurethane dispersion:**

| Mean particle size (LCS): | 32 nm |
|---|---|
| pH (solids diluted to 10 wt.%): | 7.9 |
| Solids content: | 35.9 % |

(continued)

**Characteristic data of the polyurethane dispersion:**

| | |
|---|---|
| Acid number (based on solid resin): | 21.4 mg KOH/g |
| Hard segment content: | 36.3 % |
| Mn (GPC) = 15.443 g/mol | |
| NH content | = 0.19 % |

| **Implementation Example A:** | **Weight [g]** |
|---|---|
| **1. Base lacquer** | |
| Aqueous polyurethane dispersion type 3 | 33.6 |
| Mattifying agent (silica) | 3.9 |
| Diluent (2-propanol/water 50/50) | 40.5 |
| Demineralised water | 19.5 |
| Dimethylaminoethanol | 0.3 |
| Antifoam (poly(ethersiloxane) copolymer) | 0.4 |
| Substrate wetting agent (silicone surfactant) | 0.4 |
| Thickener (polyacrylic acid) | 0.9 |
| Crosslinker (polyisocyanate, HDI trimer) | 0.6 |

**Characteristic data of the base lacquer:**

| | |
|---|---|
| Finish (40 $\mu$m; 60°; 300 s.d.): | 1.4 ± 0.0 s.d. |
| Finish (100 $\mu$m; 60°; 300 s.d.): | 1.7 ± 0.1 s.d. |
| pH value (DIN ISO 976): | 8.3 |
| Viscosity (4 mm; in accordance with DIN 53211): | 42 s |

| **2. Finishing lacquer** | |
|---|---|
| Aqueous polyurethane dispersion type 3 | 24.9 |
| Aqueous polyurethane dispersion type 1 | 12.4 |
| Mattifying agent (silica) | 2.9 |
| Diluent (2-propanol/water 50/50) | 28.0 |
| Demineralised water | 28.8 |
| Dimethylaminoethanol | 0.3 |
| Substrate wetting agent (silicone surfactant) | 0.3 |
| Thickener (polyacrylic acid ) | 1.3 |
| Crosslinker (polycarbodiimide) | 1.1 |

**Characteristic data of the finishing lacquer:**

| | |
|---|---|
| Finish (40 $\mu$m; 60°; 300 s.d.): | 2.3 ± 0.1 s.d. |
| Finish (100 $\mu$m; 60°; 300 s.d.): | 3.5 ± 0.2 s.d. |
| pH value (DIN ISO 976): | 8.4 |
| Viscosity (4 mm; in accordance with DIN 53211): | 42 s |

The base lacquer was applied in an amount of 7 g/m$^2$ and the finishing lacquer in an amount of 3 g/m$^2$ to an artificial leather (definition according to DIN 16922) by means of rotogravure.

| **Implementation Example B:** | **Weight [g]** |
|---|---|

(continued)

**1. Base lacquer**

| | |
|---|---|
| Aqueous polyurethane dispersion type 3 | 34.8 |
| Mattifying agent (silica) | 3.2 |
| Demineralised water | 57.3 |
| Dimethylaminoethanol | 0.3 |
| Antifoam (poly(ethersiloxane) copolymer) | 0.6 |
| Substrate wetting agent (silicone surfactant) | 0.8 |
| Thickener (polyacrylic acid) | 2.4 |
| Crosslinker (polyisocyanate, HDI isocyanurate) | 0.6 |

Characteristic data of the base lacquer:

| | |
|---|---|
| Finish (40 $\mu$m; 60°; 300 s.d.): | 1.6 ± 0.1 s.d. |
| Finish (100 $\mu$m; 60°; 300 s.d.): | 1.9 ± 0.0 s.d. |
| pH value (DIN ISO 976) | 8.9 |
| Viscosity (4 mm; in accordance with DIN 53211) | 40 s |

**2. Finishing lacquer**

| | |
|---|---|
| Aqueous PU dispersion type 3 | 25.4 |
| Aqueous PU dispersion type 1 | 12.7 |
| Mattifying agent (silica) | 2.2 |
| Demineralised water | 56.4 |
| Dimethylaminoethanol | 0.3 |
| Antifoam (poly(ethersiloxane) copolymer) | 0.3 |
| Substrate wetting agent (silicone surfactant) | 0.6 |
| Thickener (polyacrylic acid) | 0.9 |
| Crosslinker (polycarbodiimide) | 1.2 |

Characteristic data of the finishing lacquer:

| | |
|---|---|
| Finish (40 $\mu$m; 60°; 300 s.d.): | 5.5 ± 0.1 s.d. |
| Finish (100 $\mu$m; 60°; 300 s.d.): | 5.8 ± 0.1 s.d. |
| pH value (DIN ISO 976) | 8.9 |
| Viscosity (4 mm; in accordance with DIN 53211) | 41 s |

The NMP content of a film coated with a lacquer according to Implementation Example A was determined according to the method mentioned above.

| Charge | Procedure | NMP* [ppm] |
|---|---|---|
| | | |
| according to the prior art | spread | < 1 |
| | lacquered | 76 |
| | embossed | 62 |
| | | |
| according to the invention | spread | < 1 |
| | lacquered | < 1 |
| | embossed | < 1 |
| | | |

(continued)

| Charge | Procedure | NMP* [ppm] |
|---|---|---|
| Detection limit | | < 1 |
| * repeat determination | | |

**Claims**

1. Use of low-NMP, aqueous polymer mixture, **characterised in that** it contains at least one aqueous polyurethane dispersion based on polyurethane having a content of Zerewitinoff-active hydrogen atoms from OH groups and NH groups in the range from 0.01 to 0.25 wt.%, based on the total amount of polyurethane, and at least one mattifying agent and at least one crosslinker and/or crosslinker system and wherein the content of NMP is from 0.0 to 0.5 wt.%, based on the polymer mixture, in the coating of decorative surfaces and decorative films.

2. Use according to claim 1, **characterised in that** the polyurethane dispersion contains as structural components at least one monoalcohol (f) having a mean molecular weight Mn of from 32 to 145 g/mol and/or at least one monoamine (g) having a mean molecular weight $M_n$ of from 17 to 147 g/mol.

3. Use according to claim 1 or 2, **characterised in that** the aqueous polyurethane dispersion contains as further structural components

    a) at least one polyisocyanate,
    b) at least one polyol having a mean molar weight $M_n$ of from 500 to 6000 g/mol,
    c) at least one polyol having a mean molar weight $M_n$ of from 62 to 500 g/mol,
    d) at least one compound which contains an ionic group or a group capable of forming an ionic group, and
    e) at least one polyamine having a mean molecular weight $M_n$ of from 32 to 500 g/mol.

4. Use according to claim 3, **characterised in that** the polyurethane dispersion contains component c) in amounts of from 1.5 to 23 wt.%, based on all the structural components.

5. Use according to any one of claims 1 to 4, **characterised in that** the polyurethane dispersion has a hard segment content of from 28 to 85 wt.%.

6. Use according to claim 3, **characterised in that** the polyurethane dispersion contains component b) in amounts of from 10 to 65 wt.%, based on all the structural components.

7. Use according to any one of claims 1 to 6, **characterised in that** the crosslinker and/or crosslinker system is based on at least one polyisocyanate and/or at least one polycarbodiimide.

8. Use according to any one of claims 1 to 7, **characterised in that** it is free of NMP.

9. Decorative film obtained according to any one of claims 1 to 8.

10. Use of a decorative film according to claim 9 in the form of a dashboard or of a door lining or of an interior lining part or of a seat covering material.

**Patentansprüche**

1. Verwendung einer NMP-armen wässrigen Polymermischung, **dadurch gekennzeichnet, dass** sie wenigstens eine wässrige Polyurethan-Dispersion auf Basis von Polyurethan mit einem Gehalt an Zerewitinoff-aktiven Wasserstoffatomen aus OH-Gruppen und NH-Gruppen im Bereich von 0,01 bis 0,25 Gew.-%, bezogen auf die Gesamtmenge des Polyurethans, und wenigstens ein Mattierungsmittel und wenigstens einen Vernetzer und/oder ein Vernetzersystem enthält, und wobei der Gehalt an NMP von 0,0 bis 0,5 Gew.-%, bezogen auf die Polymermischung, beträgt, zur Beschichtung von Dekoroberflächen und Dekorfolien.

**2.** Verwendung nach Anspruch 1, **dadurch gekennzeichnet, dass** die Polyurethan-Dispersion als Aufbaukomponenten wenigstens einen Monoalkohol (f) mit einem mittleren Molekulargewicht $M_n$ von 32 bis 145 g/mol und/oder wenigstens ein Monoamin (g) mit einem mittleren Molekulargewicht $M_n$ von 17 bis 147 g/mol enthält.

**3.** Verwendung nach Anspruch 1 oder 2, **dadurch gekennzeichnet, dass** die wässrige Polyurethan-Dispersion als weitere Aufbaukomponenten

a) wenigstens ein Polyisocyanat,
b) wenigstens ein Polyol mit einem mittleren Molgewicht $M_n$ von 500 bis 6000 g/mol,
c) wenigstens ein Polyol mit einem mittleren Molgewicht $M_n$ von 62 bis 500 g/mol,
d) wenigstens eine Verbindung, die eine ionische Gruppe oder eine zur Ausbildung einer ionischen Gruppe befähigte Gruppe enthält, und
e) wenigstens ein Polyamin mit einem mittlerem Molekulargewicht $M_n$ von 32 bis 500 g/mol

enthält.

**4.** Verwendung nach Anspruch 3, **dadurch gekennzeichnet, dass** die Polyurethan-Dispersion die Komponente c) in Mengen von 1,5 bis 23 Gew.-%, bezogen auf alle Aufbaukomponenten, enthält.

**5.** Verwendung nach einem der Ansprüche 1 bis 4, **dadurch gekennzeichnet, dass** die Polyurethan-Dispersion einen Hartsegmentanteil von 28 bis 85 Gew.-% aufweist.

**6.** Verwendung nach Anspruch 3, **dadurch gekennzeichnet, dass** die Polyurethan-Dispersion die Komponente b) in Mengen von 10 bis 65 Gew.-%, bezogen auf alle Aufbaukomponenten, enthält.

**7.** Verwendung nach einem der Ansprüche 1 bis 6, **dadurch gekennzeichnet, dass** der Vernetzer und/oder das Vernetzersystem auf wenigstens einem Polyisocyanat und/oder wenigstens einem Polycarbodiimid basiert.

**8.** Verwendung nach einem der Ansprüche 1 bis 7, **dadurch gekennzeichnet, dass** sie frei von NMP ist.

**9.** Dekorfolie, erhalten nach einem der Ansprüche 1 bis 8.

**10.** Verwendung einer Dekorfolie nach Anspruch 9 in Form einer Armaturentafel oder einer Türverkleidung oder eines Innenverkleidungsteils oder eines Sitzbespannmaterials.

**Revendications**

**1.** Utilisation d'un mélange aqueux de polymères à faible teneur en N-méthyl-pyrrolidine (NMP), **caractérisé en ce qu'**il contient au moins une dispersion aqueuse de polyuréthane à base d'un polyuréthane ayant une teneur en atomes d'hydrogène actif de Zerewitinoff provenant de groupes OH et de groupes NH qui est de 0,01 % à 0,25 % en poids, relativement à la quantité totale de polyuréthane, et au moins un agent matifiant et au moins un agent de réticulation et/ou un système de réticulation et dans lequel la teneur en NMP est de 0,0 à 0,5 % en poids, relativement au mélange de polymères, pour le revêtement de surfaces décoratives et dans des films décoratifs.

**2.** Utilisation selon la revendication 1, **caractérisée en ce que** la dispersion de polyuréthane contient, comme constituants structuraux, au moins un monoalcool (f) ayant une masse moléculaire Mn moyenne de 32 g/mol à 145 g/mol et/ou au moins une monoamine (g) ayant une masse moléculaire Mn moyenne de 17 g/mol à 147 g/mol.

**3.** Utilisation selon la revendication 1 ou 2, **caractérisée en ce que** la dispersion aqueuse de polyuréthane contient comme constituants structuraux supplémentaires :

a) au moins un polyisocyanate,
b) au moins un polyol ayant une masse moléculaire Mn moyenne de 500 g/mol à 6 000 g/mol,
c) au moins un polyol ayant une masse moléculaire Mn moyenne de 62 g/mol à 500 g/mol,
d) au moins un composé qui contient un groupe ionique ou un groupe capable de former un groupe ionique, et
e) au moins une polyamine ayant une masse moléculaire Mn moyenne de 32 g/mol à 500 g/mol.

**4.** Utilisation selon la revendication 3, **caractérisée en ce que** la dispersion de polyuréthane contient le constituant c) dans des quantités de 1,5 % à 23 % en poids, relativement au total des constituants structuraux.

**5.** Utilisation selon l'une quelconque des revendications 1 à 4, **caractérisée en ce que** la dispersion de polyuréthane a une teneur en segments durs de 28 % à 85 % en poids.

**6.** Utilisation selon la revendication 3, **caractérisée en ce que** la dispersion de polyuréthane contient le constituant b) dans des quantités de 10 % à 65 % en poids, relativement au total des constituants structuraux.

**7.** Utilisation selon l'une quelconque des revendications 1 à 6, **caractérisée en ce que** l'agent de réticulation et/ou le système de réticulation est à base d'au moins un polyisocyanate et/ou d'au moins un polycarbodiimide.

**8.** Utilisation selon l'une quelconque des revendications 1 à 7, **caractérisée en ce qu'**elle est exempte de NMP.

**9.** Film décoratif obtenu selon l'une quelconque des revendications 1 à 8.

**10.** Utilisation d'un film décoratif selon la revendication 9 sous la forme d'un habillage de tableau de bord ou de portière ou d'une partie d'un garnissage intérieur ou d'un matériau de revêtement de siège.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03035710 A1
- EP 510438 A
- EP 0017199 A
- EP 0709414 A
- DE 19930961 A
- DE 19750186 A
- EP 0364331 A
- EP 0507407 A

### Non-patent literature cited in the description

- Polymer Handbooks. John Wiley, 1999, vol. VII, 675-711
- **KARSTEN.** Lackrohstoff-Tabellen. Vincents Verlag, 2000
- **W. BÜCHNER et al.** Industrielle Anorganische Chemie. Verlag Chemie, 1986, 4ff
- **DIETER STOYE ; WERNER FREITAG.** Lackharze. Carl Hanser Verlag, 1996
- tego journal. Tego Chemie Service GmbH, 2007
- Oberflächenadditive. Byk-Chemie, September 2005
- Wachsadditive. Byk-Chemie, September 2005
- **OLAF LÜCKERT.** Karsten Lackrohstoff-Tabellen. Vincentz Verlag, 2000
- **ANTHONY BOGACKI.** Sind Antifriction-Lacke ein Bluff - schön verkauft?. *Symposium "Hochwertige Werkstoffe für den Fahrzeuginnenraum,* 29 June 2005
- **JOHANN BIELEMANN.** Lackadditive. Wiley-VCH, 1998
- **MARTINA OERTELT.** Lehrbuch der Lacke und Beschichtungen. S. Hirzel Verlag, 2007, vol. 4
- **WEMFRIED HEILEN.** Additive für wässrige Lacksysteme. Vincentz Netzwork, 2009
- **GUIDO WILKE ; JÜRGEN ORTMEIER.** Kunststoffbeschichtung. Aktuell, kompakt, praxisnah. Vincentz Netzwork, 2009
- **JAHNKE, MANFRED ; MIELKE, DIRK ; VAN WELL, MICHAEL.** Dekorative Oberflächen aus Pasten PVC für den Automobilinnenraum. *SKZ Symposium "PVC-Pasten,* 19 September 2007